(19) Europäisches Patentamt
European Patent Office
Office européen des brevets

(11) Numéro de publication: **0 324 301**
**A1**

(12) **DEMANDE DE BREVET EUROPEEN**

(21) Numéro de dépôt: **88403367.1**

(51) Int. Cl.⁴: **C04B 41/68 , C04B 41/63**

(22) Date de dépôt: **30.12.88**

(30) Priorité: **11.01.88 FR 8800210**

(43) Date de publication de la demande:
**19.07.89 Bulletin 89/29**

(84) Etats contractants désignés:
**AT BE CH DE ES GB GR IT LI LU NL SE**

(71) Demandeur: **SIKA S.A.**
**101 rue de Tolbiac**
**F-75013 Paris(FR)**

(72) Inventeur: **Bachelart, Sabine**
**9 Rue du Chemin Creux**
**F-14760 Bretteville sur Odon(FR)**
Inventeur: **Thibault, Frédéric**
**4 Rue Saint Peravi**
**F-60300 Senlis(FR)**

(74) Mandataire: **Bernasconi, Jean et al**
**CABINET LEMOINE ET BERNASCONI 13,**
**Boulevard des Batignolles**
**F-75008 Paris(FR)**

(54) **Procédé d'imperméabilisation de parois en béton ou mortier et composition pour sa mise en oeuvre.**

(57) La procédé est caractérisé en ce qu'on imprègne la surface à imperméabiliser d'un ouvrage rigide en béton ou mortier (2), avec une composition composée de, ou contenant, une dispersion aqueuse modifiée par des polymères et contenant du bioxyde de silicium amorphe et au moins un polymère. La surface imprégnée peut être recouverte d'une couche de barbotine (11).

Fig:1

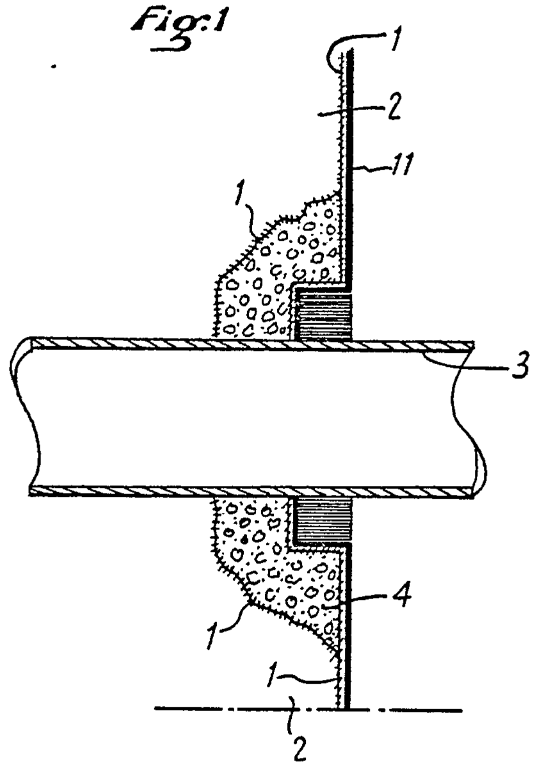


EP 0 324 301 A1

**Procédé d'imperméabilisation de parois en béton ou mortier et composition pour sa mise en oeuvre.**

La présente invention a trait à un procédé d'imperméabilisation pour les parois ou cuvelages en béton armé, béton précontraint ou mortier, et notamment pour des ouvrages enterrés tels que caves, galeries et souterrains, afin d'empêcher l'eau sous pression de pénétrer dans ces ouvrages.

On connaît déjà des additifs destinés à améliorer l'étanchéité des bétons ou mortiers. Ces additifs sont mélangés au liant minéral tel qu'un ciment, lors de la mise en oeuvre du béton ou mortier de façon à former un mélange intime et permettre d'obtenir l'imperméabilisation voulue après la prise ou solidification du liant.

Un tel additif est, par exemple, décrit dans le brevet français FR-A-2.244.725.

La déposante a également mis au point une dispersion aqueuse utilisable notamment pour la fabrication d'un matériau pour la construction et/ou le bâtiment, décrite dans le brevet européen EP-A-0.222.932. Cette dispersion aqueuse modifiée par des polymères est caractérisée en ce qu'elle contient du bioxyde de silicium amorphe et au moins un polymère. Lorsque l'on mélange la dispersion aqueuse modifiée par le polymère, selon le brevet européen précité, avec au moins un liant inorganique et éventuellement avec au moins un agrégat, puis qu'on amène le mélange à réagir afin qu'il durcisse ou fasse prise, on obtient un matériau durci, tel que par exemple un béton ou un mortier, présentant un degré très élevé d'imperméabilité et qui évite les inconvénients des additifs de l'art antérieur. Ce procédé n'est, cependant, utilisable sur des ouvrages déjà existants que par l'adjonction d'une couche d'un tel mortier.

L'objectif de l'invention est donc de fournir un procédé d'imperméabilisation a posteriori, notamment pour les parois ou cuvelages, par exemple à l'intérieur d'ouvrages enterrés tels que caves, galeries et souterrains, facile à mettre en oeuvre et pouvant résister à des hauteurs d'eau importantes.

L'invention a pour objet un procédé d'imperméabilisation de parois en béton ou mortier, caractérisé en ce qu on imprègne la surface a imperméabiliser d'un ouvrage rigide en béton ou mortier, avec une composition composée de, ou contenant, une dispersion aqueuse modifiée par des polymères et contenant du bioxyde de silicium amorphe et au moins un polymère, selon le brevet européen EP-A-0.222.932.

L'invention a également pour objet une composition pour l'imprégnation par la surface d'une paroi en béton ou mortier composée de, ou contenant, une dispersion aqueuse modifiée par des polymères et contenant du bioxyde de silicium amorphe et au moins un polymère.

Conformément à l'invention, l'imprégnation s'effectue par tous moyens convenables tels que, par exemple, à la brosse ou par pulvérisation.

Conformément à une caractéristique de l'invention, le béton ou mortier doit avoir une durée assez longue de durcissement avant l'imprégnation d'imperméabilisation. De préférence, cette durée est d'au moins 28 jours.

De façon avantageuse, la paroi à imperméabiliser est humidifiée avant l'application de la composition. Par contre, toute venue d'eau doit être obturée ou canalisée avant l'imprégnation.

L'imprégnation par la composition s'effectue sur une surface propre sans cavité ni gravillons ni peau superficielle, susceptible de cacher des cavités ou des laitances de ressuage manquant de solidité. Toute trace d'huile ou de graisse, de produits de décoffrage ou autre salissure sera éliminée.

Ce nettoyage peut être effectué par exemple par lavage a l'eau sous pression, ce qui assure alors simultanément l'humidification du matériau dur.

Dans une forme de réalisation particulière, on ajoute à la dispersion un additif tel qu'un catalyseur à base de soude.

De préférence, la composition comporte, outre la dispersion, une solution de catalyseur à base de soude, de l'ordre de 2 g à 10 g/l d'eau, par exemple 4 g/l, cette solution étant de préférence d'environ 0,5 l à 1,5 l par kg de dispersion aqueuse à l'état pâteux.

On peut également ajouter avantageusement de la chaux hydratée, de préférence dans un rapport d'environ un volume pour un volume de dispersion à l'état pâteux.

La composition composée de, ou contenant, la dispersion, est ajustée pour présenter un degré de fluidité suffisant pour une bonne imprégnation.

Dans un mode de mise en oeuvre préféré du procédé selon l'invention, on peut, après l'imprégnation par la composition, recouvrir la surface à l'aide d'une barbotine. De façon particulièrement avantageuse, la barbotine peut être obtenue par mélange d'une dispersion selon le brevet européen EP-A-0.222.932 avec un mortier. Le micro-mortier obtenu s'applique ensuite, par exemple à la brosse ou au rouleau, sur une faible épaisseur, de préférence au moins deux heures après l'imprégnation, le support étant préalablement réhumidifié.

Conformément à l'invention, la dispersion appliquée à l'imperméalisation contient de préférence de 1 à 60% en poids de polymère dissous et/ou dispersé et/ou émulsionné dans de l'eau, 5 à 75% en poids de bioxyde de silicium amorphe, 0 à 5%

en poids d'un adjuvant de dispersion, et éventuellement 0 à 15 % en poids d'au moins un régulateur de viscosité, et éventuellement 0 à 20% en poids d'un agent fluidifiant et 24 à 94% d'eau.

A titre de polymère, on peut utiliser des durcisseurs polyaminés et des résines époxydes en émulsion dans de l'eau; des homopolymères et des copolymères, dispersés dans de l'eau, d'esters vinyliques, d'esters de l'acide acrylique, du styrène, du butadiène, des composés vinyl halogénés; des résines carboxylées, des résines aldéhydiques d'acides sulfoniques aromatiques, des résines d'urée, des résines d'acides sulfaminiques et de mélamine, des résines d'amino-s-triazines sulfonées dissoutes dans de l'eau.

La composition contient avantageusement, à titre de bioxyde de silicium amorphe, un matériau avec une surface spécifique (BET) selon Brunauer-Emmet-Teller de 10-40 $m^2$ /g et une teneur en $SiO_2$ de 50 à 100% en poids.

De façon avantageuse, il s'agit de fumée de silice.

De préférence, l'adjuvant de dispersion est de l'acide polyacrylique.

La dispersion peut contenir, à titre de régulateur de viscosité, des alcools monofonctionnels et/ou polyfonctionnels et/ou des éthers glycoliques et/ou des composés de la formule générale

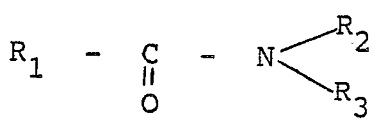

dans laquelle $R_1$ représente un radical $NH_2$- ou $(CH_2)n$
$R_2$ représente un atome d'hydrogène ou un radical $-(CH_2)m-$,
$R_3$ représente un atome d'hydrogène ou un radical alkyle, plus particulièrement $-CH_3$,
n et m représentant chacun des nombres dont la valeur varie de 1 à 5.

A titre de fluidifiant, la dispersion peut contenir des résines de mélamine ou de formaldéhyde sulfoné, des résines de naphtalène et de formaldéhyde sulfonés, des lignine-sulfonates, des sels d'acide polyhydroxycarboxylique.

L'invention va maintenant être décrite à titre d'exemple non limitatif en se référant au dessin annexé dans lequel:

la figure 1 représente une vue schématique en coupe d'une paroi de béton traitée selon l'invention au niveau d'une traversée de revêtement,

la figure 2 représente un schéma similaire au niveau d'un joint de dilatation ou d'une fissure active,

la figure 3 représente une vue similaire au niveau d'une fissure morte ou reprise de bétonnage,

la figure 4 représente une vue schématique en coupe au niveau d'un fond de cuvelage.

a) Préparation de la dispersion.

On prépare, selon le brevet européen EP-A-0.222.932, une pâte par mélange de microsilice (fumée de silice) dénommée Silicafume et d'une résine styrène butadiène dans laquelle sont ajoutés des fluidifiants. La composition en poids est de 10 à 40 % de microsilice, le reste étant constitué de la résine, ayant sa teneur en eau usuelle, et des fluidifiants.

La dispersion se présente sous forme d'une émulsion pâteuse.

b) Préparation de la surface.

On inspecte la surface à traiter d'un ouvrage rigide en béton armé ou béton précontraint, durci depuis plus d'un mois, et dont les superstructures ont été terminées pour éviter des mouvements importants. S'il y a lieu, on met la surface en question hors d'eau et non suintante par obturation ou drainage de toutes les venues d'eau. Ceci peut être effectué de toute façon usuelle en utilisant au maximum les possibilités de rabattement de la nappe d'eau, en particulier en aménageant des puisards permettant de pomper l'eau. L'étanchéité peut être effectuée en posant des bouchons d'étanchéité en commençant par les parties hautes à l'aide des méthodes classiques d'imperméabilisation de cuvelages ou encore par injection; si nécessaire, le bouchon peut être remplacé par un drain.

On vérifie que la surface en question ne présente pas de cavité ni de gravillons ou autres parties superficielles susceptibles de se déliter et, si nécessaire, on gratte et on traite la surface. Les reprises de bétonnage, les fissures apparentes et les ragréages éventuels sont ouverts et débarrassés de toutes les parties non adhérentes ou de faible cohésion.

La totalité de la surface est nettoyée par lavage a l'eau sous pression la veille de l'application de la composition.

c) Préparation de la composition.

Le mélange pâteux préparé selon a) est mélangé à une solution de catalyseur et à de la chaux

hydratée à raison de 3,25 kg de pâte pour 4,1 l de solution aqueuse d'un additif catalyseur tel que la soude, et pour 1,3 kg de chaux hydratée.

La chaux hydratée présente avantageusement une surface spécifique BLAINE = 15.000 $cm^2/g$, une teneur en hydroxyde de calcium d'environ 92%, une humidité inférieure à 1%, une densité apparente de 0,35 environ, une granulométrie à 94% inférieure à 63 microns.

Le mélange ainsi réalisé, qui présente la fluidité d'une sauce mousseline, est appliqué à raison de 450 $g/m^2$, c'est-à-dire deux passes nourries, à la brosse ou par pulvérisation.

Sur le dessin, on a représenté schématiquement la couche d'imprégnation 1 sur la surface du béton 2.

d) Achèvement.

Si nécessaire, les parties en creux, recouvertes de la couche d'application 1, sont, au moins 24 heures après l'application, remplies à l'aide d'un mortier réalisé de préférence selon le brevet européen EP-A-0.222.932.

On voit sur la figure 1 que la cavité autour d'une sortie de traversée 5 a été remplie d'un tel mortier 4. Dans le cas d'un joint de dilatation (figure 2), on a mis en place, préalablement au mortier 4, une bande 5 prise, avec un fond de joint 6, dans une masse de colle 7, puis le mortier 4 est introduit de part et d'autre d'un joint flexible 8. Dans le cas d'une fissure morte (figure 3), on injecte un gel d'étanchéité dans la fissure 9 et l'on remplit la cavité avec le mortier 4.

De même, les angles rentrants (figure 4) sont arrondis à l'aide d'un mortier 4 similaire ou identique.

Après durcissement et humidification du mortier, la surface du mortier est elle-même imprégnée de la compostion selon c), formant le couche d'imprégnation 10.

e) Application de la barbotine.

On prépare une barbotine constituée d'un mortier selon le brevet européen précité, par exemple en malaxant avec la matière pâteuse selon a), un mortier à base de liant hydraulique et de charge spéciale telle que sable de silice.

Le micro-mortier obtenu est ensuite appliqué à la brosse ou au rouleau à raison de 2,3 $kg/m^2$, soit une épaisseur de 1 mm environ. Avant l'application de la barbotine, on réhumidifie la surface qui a été imprégnée de la composition appliquée selon l'invention, formant la couche 11 de la barbotine.

De préférence, la barbotine est appliquée systématiquement sur toute surface horizontale accessible aux piétons.

f) Colmatage des drains et fermeture des puisards.

Les drains ne seront pas obturés avant que le revêtement d'imperméabilisation appliqué ait au moins 28 jours de durcissement. L'obturation des drains se fait en commençant par la base, en utilisant les procédés classiques.

Les drains ayant été bouchés, il reste à assurer l'étanchéité des puisards éventuels. On peut agir comme pour un petit cuvelage en ménageant le passage des pompes, puis l'on ferme le passage avec un bouchon et on raccorde l'étanchéité.

Dans certains cas, on peut mettre en oeuvre dans l'invention le procédé selon la présente invention ainsi que le procédé décrit dans le brevet européen précité. Par exemple, si l'état des bétons au sol dans un cuvelage, cave ou galerie oblige à faire des ragréages très importants ou si ce béton est ruisselant alors que les parois de béton sont de bonne qualité, on réalise au sol une chape étanche par. le procédé selon le brevet européen précité, alors que, sur les parois de mur et en retour de plafond, on réalise l'imprégnation d'imperméabilisation selon la présente invention. Le mortier hydrofugé selon le brevet européen précité est appliqué, en plus de la chape, sur une faible hauteur sur les parois, par exemple jusqu'à 20 cm de hauteur, un recouvrement s'effectuant sur au moins 10 cm de hauteur entre l'imprégnation et l'application de mortier, l'imprégnation pouvant être effectuée avant ou après l'application du mortier.

Bien que l'invention ait été décrite à propos d'une forme de réalisation particulière, il est bien entendu qu'elle n'y est nullement limitée et qu'on peut lui apporter diverses modifications de formes ou de matériaux sans pour cela s'éloigner ni de son cadre ni de son esprit.

## Revendications

1. Procédé d'imperméabilisation de paroi en béton ou mortier, caractérisé en ce qu'on imprègne la surface à imperméabiliser d'un ouvrage rigide en béton ou mortier, avec une composition composée de, ou contenant, une dispersion aqueuse modifiée par des polymères et contenant du bioxyde de silicium amorphe et au moins un polymère.

2. Procédé selon la revendication 1, caractérisé en ce qu'on humidifie la paroi avant l'imprégnation.

3. Procédé selon l'une des revendications 1 et 2, caractérisé en ce qu'on imprègne une paroi ayant une durée de durcissement d'au moins 28 jours.

4. Procédé selon l'une quelconque des revendications 1 à 3, caractérisé en ce qu'après l'imprégnation, on recouvre la surface à l'aide d'une barbotine.

5. Procédé selon la revendication 4, caractérisé en ce que l'on utilise une barbotine obtenue par mélange d'une dispersion aqueuse modifiée par des polymères et contenant du bioxyde de silicium amorphe et au moins un polymère, avec un ciment ou mortier.

6. Procédé selon l'une quelconque des revendications 1 à 5, caractérisé en ce que, avant l'imprégnation, s'il y a lieu, on nettoie la surface de la paroi à imprégner et on la met hors d'eau.

7. Procédé selon l'une quelconque des revendications 1 à 6, caractérisé en ce que la composition comporte, outre la dispersion, une solution de catalyseur à base de soude.

8. Procédé selon l'une quelconque des revendications 1 à 7, caractérisé en ce que la composition comporte, outre la dispersion, de la chaux hydratée.

9. Procédé selon l'une quelconque des revendications 1 à 8, caractérisé en ce que la dispersion est une dispersion de fumée de silice dans une résine styrène butadiène.

10. Composition pour la mise en oeuvre du procédé selon l'une quelconque des revendications 1 à 9, caractérisée en ce qu'elle est composée de, ou contient, une dispersion aqueuse modifiée par des polymères et contenant du bioxyde de silicium amorphe et au moins un polymère.

11. Composition selon la revendication 10, caractérisée en ce qu'elle comporte une solution de catalyseur à base de soude.

12. Composition selon l'une des revendications 10 et 11, caractérisée en ce qu'elle comporte de la chaux hydratée.

13. Composition selon la revendication 12, caractérisée en ce qu'elle comporte de la chaux hydratée dans un rapport d'environ un volume pour un volume de dispersion à l'état pâteux.

14. Composition selon l'une quelconque des revendications 10 à 13, caractérisée en ce qu'elle contient de 1 à 60 % en poids de polymères dissous et/ou dispersés et/ou émulsionnés dans de l'eau, 5 à 75 % en poids de bioxyde de silicium amorphe, et 0 à 5 % en poids d'un adjuvant de dispersion.

15. Composition selon la revendication 14, caractérisée en ce qu'elle comporte 0 à 15 % d'au moins un régulateur de viscosité.

16. Composition selon l'une des revendications 14 et 15, caractérisée en ce qu'elle comporte de 0 à 20 % d'un agent fluidifiant.

17. Composition selon l'une quelconque des revendications 10 à 16, caractérisée en ce qu'elle contient, à titre de polymères, un ou des polymères tels que durcisseurs polyaminés et résines époxydes en émulsion dans de l'eau; des homopolymères et des co-polymères, dispersés dans de l'eau, d'esters vinyliques, d'esters de l'acide acrylique, du styrène, du butadiène, des composés vinyl halogénés, des résines carboxylées, des résines aldéhydiques d'acides sulfoniques aromatiques, des résines d'urée, des résines d'acides sulfoniques et de mélamine, des résines d'amino-s-triazine sulfonées dissoutes dans de l'eau.

18. Composition selon l'une quelconque des revendications 10 à 17, caractérisée en ce qu elle comporte, à titre de bioxyde de silicium amorphe, un matériau avec une surface spécifique (BET) de 10-40 $m^2$ /g et une teneur en $SiO_2$ de 50 à 100 % en poids.

19. Composition selon l'une quelconque des revendications 10 à 18, caractérisée en ce qu'elle contient une résine styrène butadiène et de la fumée de silice.

Fig:1

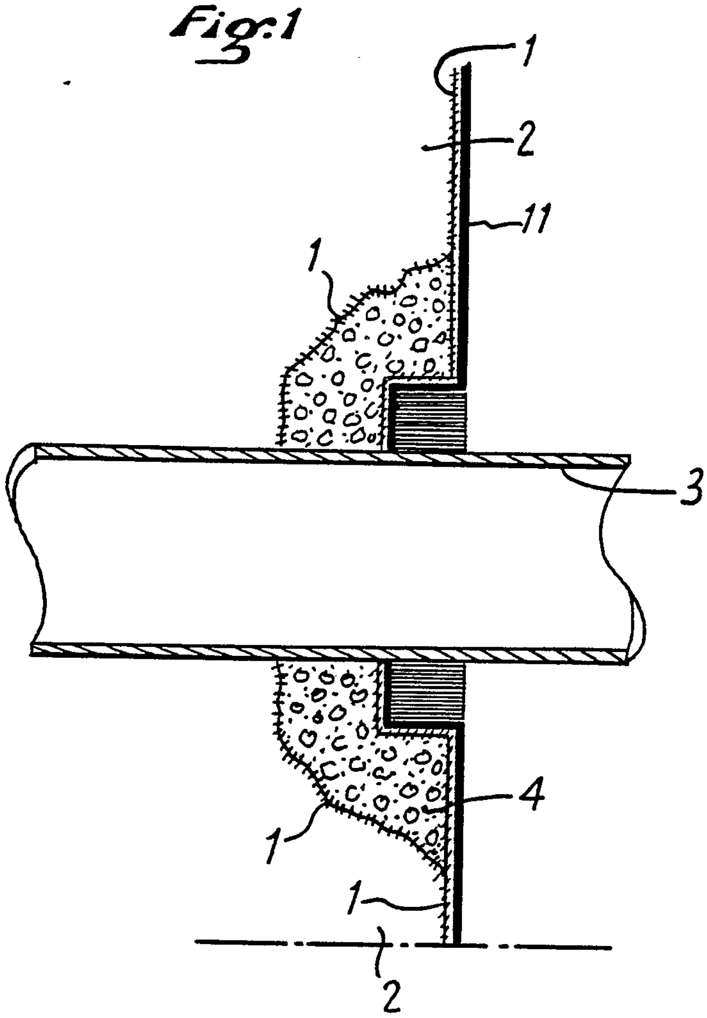


Fig:2

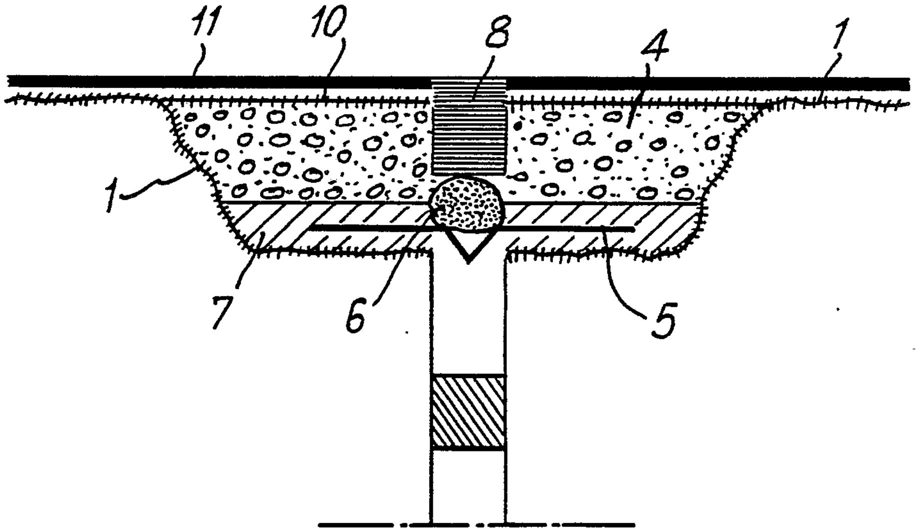

Fig:3

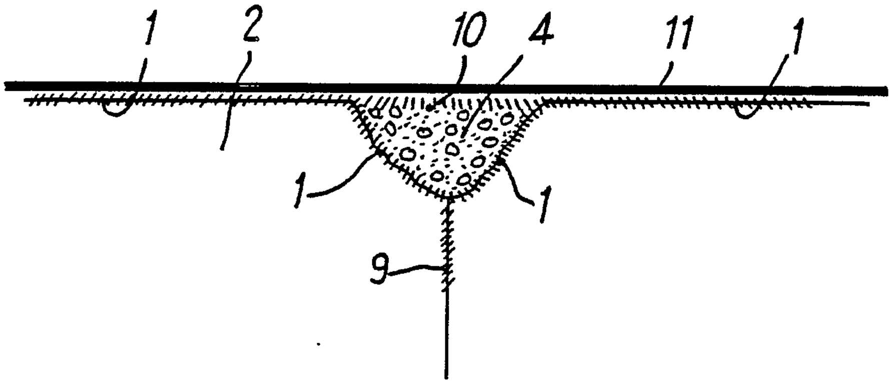


Fig:4

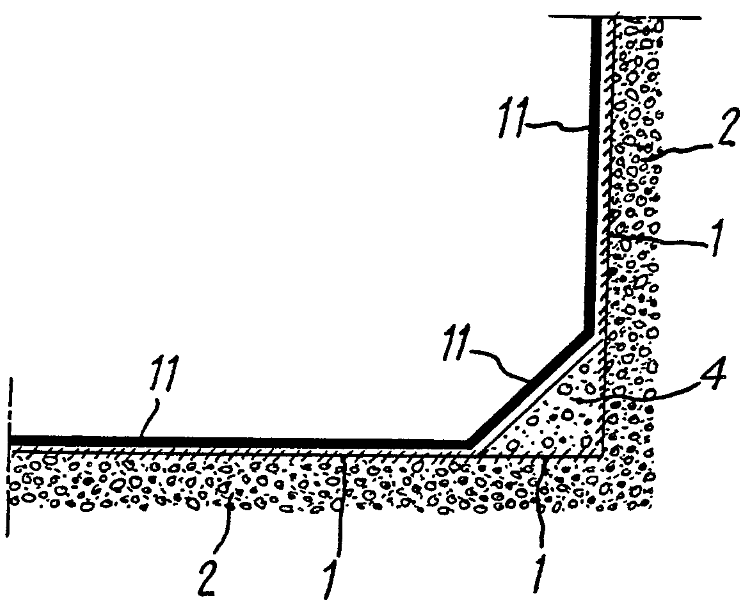

Office européen des brevets

# RAPPORT DE RECHERCHE EUROPEENNE

Numero de la demande

EP 88 40 3367

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X<br>Y | WO-A-8 202 709 (HEMPEL TECHNOLOGY A/S)<br>* Revendications 5-11,15,16; page 3, ligne 31 - page 4, ligne 14 * | 1-3,6,8-10,12-19<br>4,5 | C 04 B 41/68<br>C 04 B 41/63 |
| Y,D | EP-A-0 222 932 (SIKA AG)<br>* Revendications 1-3,11-14,16,17; page 6, lignes 1-7; exemple 4 * | 4,5 | |
| A | US-A-4 088 804 (C.E. CORNWELL et al.)<br>* Revendications 1,2; colonne 1, lignes 12-16; colonne 2, paragraphe 1 * | 1-19 | |
| A | FR-A- 952 723 (F.E. BARTELL)<br>* Revendications A1,3 * | 1,10 | |

**DOMAINES TECHNIQUES RECHERCHES (Int. Cl.4)**

C 04 B 41/00
C 04 B 14/00
C 04 B 18/00
C 04 B 24/00
C 04 B 26/00
C 04 B 22/00
C 04 B 28/00

Le présent rapport a été établi pour toutes les revendications

| Lieu de la recherche | Date d'achèvement de la recherche | Examinateur |
|---|---|---|
| LA HAYE | 15-03-1989 | HAUCK, H.N. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant